# EUROPÄISCHE PATENTSCHRIFT

(11) **EP 1 270 321 B1**
(45) Veröffentlichungstag und Bekanntmachung des Hinweises auf die Patenterteilung: **25.04.2007**
(21) Anmeldenummer: 02012956.5
(22) Anmeldetag: 12.06.2002
(51) Int. Cl.: B60Q 1/10, B60Q 1/12

(54) **Scheinwerfer für Fahrzeuge**
Headlamp for vehicle
Phare pour véhicule

(30) Priorität: 27.06.2001 DE 10131099
(43) Veröffentlichungstag der Anmeldung: 02.01.2003
(73) Patentinhaber: Hella KGaA Hueck & Co., 59552 Lippstadt (DE); DaimlerChrysler AG, 70327 Stuttgart (DE)
(72) Erfinder: Willeke, Franz-Georg, 59609 Anröchte-Klieve (DE); Herbers, Thomas, 59555 Lippstadt (DE); Jocher, Rainer, 71134 Aidlingen (DE); Schöning, Frank, 33378 Wiedenbrück (DE); Zehanciuc, Mario, 33142 Büren-Wewelsburg (DE); Henschel, Mathias, 72770 Reutlingen (DE)
(74) Vertreter: Ostermann, Thomas

(56) Entgegenhaltungen:
- EP-A- 0 171 318
- EP-A- 0 275 095
- EP-A- 0 588 715
- EP-A- 0 956 998
- EP-A- 1 048 522
- EP-A- 1 147 942
- EP-A- 1 149 731
- DE-A- 19 810 480
- DE-A- 19 933 663
- US-A- 5 806 956

## Beschreibung

Die Erfindung betrifft einen Scheinwerfer für Verwendung in einem Fahrzeug nach dem Oberbegriff des Patentanspruchs 1.

Ein solcher Scheinwerfer für Fahrzeuge ist aus der DE-U-87 13 122 bekannt. Das Lichtmodul weist im vorderen Bereich eine Linse auf und ist in diesem Bereich von einem rahmenartigen Aufnahmeteil umgeben. Das Lichtmodul ist an dem rahmenartigen Aufnahmeteil um eine vertikale Achse schwenkbar gelagert. Die vertikale Achse geht durch den vorderen Bereich des Scheinwerfers hindurch. An einem den rückwärtigen Bereich des Lichtmoduls umgebenden Bügel ist eine zweite Einstellvorrichtung angebracht, die aus einer manuellen Stelleinrichtung und einem fernbetätigbaren Steller für eine Kurvenlichtregelung besteht. Die Stelleinrichtung und der Steller weisen ein gemeinsames Stellglied auf, welches quer zur vertikalen Achse verläuft und über ein Schneckenradgetriebe mit dem Reflektor gekoppelt ist. Das Lichtmodul ist in vertikaler Richtung nur an den die Achse definierenden Lagerstellen des Aufnahmeteils gehaltert. Dadurch müssen, besonders bei einem schweren Lichtmodul und wenn die vertikale Achse horizontal von dem Massenschwerpunkt des Lichtmoduls beabstandet ist, die Lagerstellen und das rahmenartig Aufnahmeteil entsprechend stabil dimensioniert sein. Das rahmenartige Aufnahmeteil ist in seinem vorderen Bereich um eine horizontale Achse an dem Trägerelement schwenkbar gelagert. Die horizontale Achse schneidet die optische Achse des Lichtmoduls in demselben Punkt wie die vertikale Achse. An dem Trägerelement ist eine zweite Einstellvorrichtung angebracht, durch die das Lichtmodul manuell zusammen mit dem Aufnahmeteil um die horizontale Achse schwenkbar ist. Die zweite Einstellvorrichtung weist einen Bowdenzug auf, damit das Lichtmodul vom Fahrzeuginnenraum her verstellbar ist. Falls eine Variante des Scheinwerfers ohne Kurvenlichtregelung gewünscht ist, kann das Lichtmodul nicht zusammen mit einem weiteren Bauteil des Scheinwerfers als Standardbaugruppe verwendet werden.

Aus der DE-A-198 02 023 ist ein Scheinwerfer für Fahrzeuge bekannt, der ein topfförmiges Trägerelement aufweist, dessen Vorderseite durch eine lichtdurchlässige Abschlussscheibe abgeschlossen ist. In dem von Trägerelement und Abschlussscheibe gebildeten Inneren des Scheinwerfers ist ein Lichtmodul, das ein Projektionsmodul ist, angeordnet. Das Projektionsmodul ist an ein Aufnahmeteil angebracht, das in dem Scheinwerfergehäuse um eine horizontale Achse schwenkbar gelagert ist. Das Aufnahmeteil ist durch einen fernbetätigbaren ersten Steller zur vertikalen Leuchtweiteregelung des Scheinwerfers um die horizontale Achse schwenkbar. Das Projektionsmodul ist an dem Aufnahmeteil um eine vertikale Achse verstellbar gelagert und durch einen am Aufnahmeteil befestigten fernbetätigbaren zweiten Steller für Kurvenlicht um diese vertikale Achse schwenkbar. Die vertikale Achse verläuft durch den vorderen Randbereich des schalenförmigen Reflektors bzw. in der Nähe einer vorderen Linse des Projektionsmoduls. Der zweite fernbetätigbare Steller wird durch eine externe elektrische Steuereinheit in Abhängigkeit von der Ausrichtung der Vorderräder des Fahrzeugs im Verhältnis zu dessen Achse sowie in Abhängigkeit von anderen Parametern, wie etwa von der Fahrgeschwindigkeit des Fahrzeugs, der Betätigung der Blinkleuchten usw., gesteuert. Das schwere Projektionsmodul ist nur an den Lagerstellen des Aufnahmeteils gehaltert und nur selber als Standardbauteil für einen Scheinwerfer mit oder ohne Kurvenlichtregelung verwendbar.

Aus der US 5 806 956 A ist ein Scheinwerfer für Fahrzeuge bekannt, der eine erste Einstellvorrichtung zum Verschwenken eines Lichtmoduls um eine horizontale Achse und eine zweite Einstellvorrichtung zum Verschwenken des Lichtmoduls um eine vertikale Achse aufweist. Das Lichtmodul ist an einem Aufnahmeteil und das Aufnahmeteil an einem Trägerelement schwenkbar gelagert. Die Justierung des Lichtmoduls um die horizontale Achse erfolgt stets elektronisch über einen mittels eines Mikroprozessors angesteuerten Motor.

Aus der DE 199 33 663 A1 ist ein Scheinwerfer für Fahrzeuge bekannt, der über eine erste Einstellvorrichtung zum Verschwenken des Lichtmoduls um eine horizontale Achse und eine zweite Einstellvorrichtung zum Verschwenken des Lichtmoduls um eine vertikale Achse aufweist. Das Lichtmodul ist an einem Aufnahmeteil sowie das Aufnahmeteil an einem Trägerelement schwenkbar gelagert. Das Verschwenken des Lichtmoduls mittels der ersten Einstellvorrichtung kann entweder manuell oder automatisch durch eine Steuereinrichtung erfolgen.

Aus der EP 0 588 715 A1 ist ein Scheinwerfer für Fahrzeuge bekannt, der einen Steller zur Leuchtweitenregelung und eine erste Stelleinrichtung zur manuellen Justierung des Scheinwerfers um eine horizontale Achse aufweist. Die erste Stelleinrichtung wirkt auf den ersten Steller ein, der über Gleitführungen in vertikaler Richtung verschiebbar ist. Nachteilig hieran ist, dass die manuelle Justierung um die horizontale Achse mittels der ersten Stelleinrichtung das Vorhandensein des Stellers erfordert.

Aufgabe der Erfindung ist es, den im Oberbegriff des Anspruchs 1 beschriebenen Scheinwerfer für Verwendung in einem Fahrzeug derart zu verbessern, dass das Lichtmodul an dem Aufnahmeteil zusätzlich zu den Lagerstellen, die eine Achse definieren, von einem Bauteil gehaltert ist und trotzdem keine zusätzliches Bauteil notwendig ist und darüber hinaus eine Verwendung einer großen Baugruppe des Scheinwerfers sowohl bei einem Scheinwerfer mit als auch bei einem Scheinwerfer ohne Kurvenlichtregelung möglich ist und für das Lichtmodul automatisch die Leuchtweite regelbar und eine manuelle Justierung um die horizontale Achse möglich ist.

Zur Lösung dieser Aufgabe weist die Erfindung die Merkmale des Patentanspruchs 1 auf.

Nach der Erfindung ist das Lichtmodul zusammen mit dem Aufnahmeteil als Standardteil für einen Scheinwerfer mit und ohne Kurvenlicht verwendet werden. Lediglich das Trägerelement ist dann mit unterschiedlichen zweiten Einstellvorrichtungen zu versehen. Für einen Kurvenlichtscheinwerfer weist dann die zweite Einstellvorrichtung zusätzlich zu einer manuellen Stellvorrichtung noch einen fernbetätigbaren Steller für die Kurvenlichtregelung auf. Die Ausrichtung des Lichtmodul für Kurvenlicht wird im Allgemeinen in Abhängigkeit von der Richtung der Vorderräder des Fahrzeugs, bezogen auf seine Achse, sowie von anderen Parametern gesteuert, wie etwa von der Fahrgeschwindigkeit des Fahrzeugs, von der Einschaltung der Fahrtrichtungsanzeiger usw.

Hierbei ist es vorteilhaft, wenn der zur Leuchtweiteregulierung dienende fernbetätigbare Steller und die justierbare erste Stelleinrichtung von einem einzigen fernbetätigbaren Steller gebildet sind, wobei der einzige Steller zum Justieren des Lichtmoduls in einer Grundeinstellung mit einem einen nicht flüchtigen Speicher umfassenden Steuergerät zur Speicherung eines die Grundeinstellung des Lichtmoduls definierenden Einstellwertes verbunden ist. Das Lichtmodul wird bei einer entsprechenden Ansteuerung der Steller durch das Steuergerät anhand des Einstellwertes in seine gesetzlich vorgeschriebene Grundeinstellung gebracht, weshalb eine mechanische Einstelleinrichtung benötigt wird. Durch die selbsttätige Einstellung entfällt ein zeitintensives Justieren mittels Einstellschrauben.

Eine sichere und stabile Halterung des Lichtmoduls an dem Aufnahmeteil ist auch bei einem langgestreckten schweren Projektionsmodul gegeben, wenn das Stellglied der ersten Einstellvorrichtung in seiner Verstellrichtung quer zur horizontalen Achse und quer zur optischen Achse des Lichtmoduls verläuft, wobei das Stellglied in einem hinteren Bereich des Lichtmoduls angeordnet ist und die horizontale Achse, wie an sich bekannt, in einem vorderen Bereich des Lichtmoduls verläuft. In diesem Zusammenhang ist es vorteilhaft, wenn das Aufnahmeteil in seiner Hauptausdehnungsrichtung horizontal verläuft und im vorderen Bereich zwei Haltearme mit Lagerstellen für das Lichtmodul und im hintern Bereich eine Haltevorrichtung für die erste Einstellvorrichtung aufweist, wobei das Lichtmodul im vorderen Bereich von einem Halterahmen umgeben ist, der an dem vorderen Rand des Reflektors befestigt ist und mit den Lagerstellen der Haltearme des Aufnahmeteils zusammenwirkt. Das Lichtmodul und das Aufnahmeteil sind zusammen eine stabile Einheit, da das Lichtmodul an drei Punkten mit dem Aufnahmeteil verbunden ist. Die Funktion des fernbetätigbaren Stellers ist auch bei den im Fahrbetrieb entstehenden großen vertikalen Kräften sicher, da wegen dem vertikalen Verlauf der Verstellrichtung des Stellglieds kein Drehmoment auf das Stellglied bzw. dem fernbetätigbaren Steller wirkt. Aus diesem Grund kann ein wesentlich leistungsschwächerer Steller eingesetzt werden und der Scheinwerfer kann sowohl kleinere Abmessungen als auch eine geringere Masse aufweisen.

Die erste Einstellvorrichtung ist einfach aufgebaut und sicher in der Funktion, wenn der fernbetätigbare erste Steller von der manuellen ersten Stelleinrichtung an dem Aufnahmeteil getragen ist und zwischen dem Stellglied der ersten Einstelleinrichtung und einem an dem äußeren Rand des Reflektors angebrachten Gelenkteil eine gelenkige Verbindung besteht.

Das Modul ist sowohl um die vertikale Achse für Kurvenlicht als auch manuell schwenkbar, wenn die zwischen dem Aufnahmeteil und dem Trägerelement bestehende zweite Einstellvorrichtung einen zur Kurvenlichtregelung dienenden fernbetätigbaren zweiten Steller und eine manuelle zweite Stelleinrichtung mit einem gemeinsamen Stellelement aufweisen. Als Steller kann ein elektrischer Antrieb dienen.

Das Lichtmodul ist zusammen mit dem Aufnahmeteil stabil mit dem Trägerelement verbunden, wenn die vertikale Achse durch eine einzige Lagerstelle definiert ist, die in Anbaulage des Scheinwerfers unterhalb des Lichtmodul angeordnet ist, wobei das Trägerelement in einem horizontalen Abstand zu der Lagerstelle mindestens eine Auflagefläche für das Aufnahmeteil aufweist. Ein leichtgängiges Verschwenken des Lichtmoduls um die vertikale Achse ist sicher, da oberhalb des Lichtmoduls keine die vertikale Achse definierende Lagerstelle besteht. Der Bereich oberhalb des Lichtmoduls für eine Lagerstelle ist kritisch, da diese sich bei hohen Temperaturen verformen kann und dann schwergängig verstellbar ist.

Auch wenn das Lichtmodul von einem schweren Projektionsmodul gebildet ist, ist dieses stabil mit dem Trägerelement verbunden, wenn die Auflagefläche unterhalb des hinteren Bereichs des Lichtmoduls angeordnet ist und die vertikale, wie an sich bekannt, durch einen vorderen Bereich des Lichtmoduls hindurch verläuft, wobei zwischen dem Aufnahmeteil und dem Trägerelement mindestens ein Halteelement besteht, das das Aufnahmeteil in Verstellrichtung an dem Trägerelement haltert.

Bei einer besonders vorteilhaften Weiterbildung der Erfindung verläuft die vertikale Achse durch den geometrischen Zentrumsbereich eines konvexen Vorderseitenabschnitts des Lichtmoduls hindurch. Dadurch besteht zwischen dem konvexen Vorderseitenabschnitt des Lichtmoduls und einem benachbarten Rand eines Abdeckelements in jeder Schwenkstellung des Lichtmoduls ein gleichgroßer Spalt.

Der konvexe Vordemeitenabschnitt des Lichtmoduls kann von Vorderseite der Linse und/oder einem die Linse umgebenden Abdeckrahmen gebildet sein.

In der Zeichnung sind zwei Ausführungsbeispiele nach der Erfindung dargestellt und zwar zeigen
- Fig. 1: in einer Seitenansicht ein erstes Lichtmodul eines Fahrzeugs und
- Fig. 2: in einer Draufsicht das Lichtmodul in Fig 1.

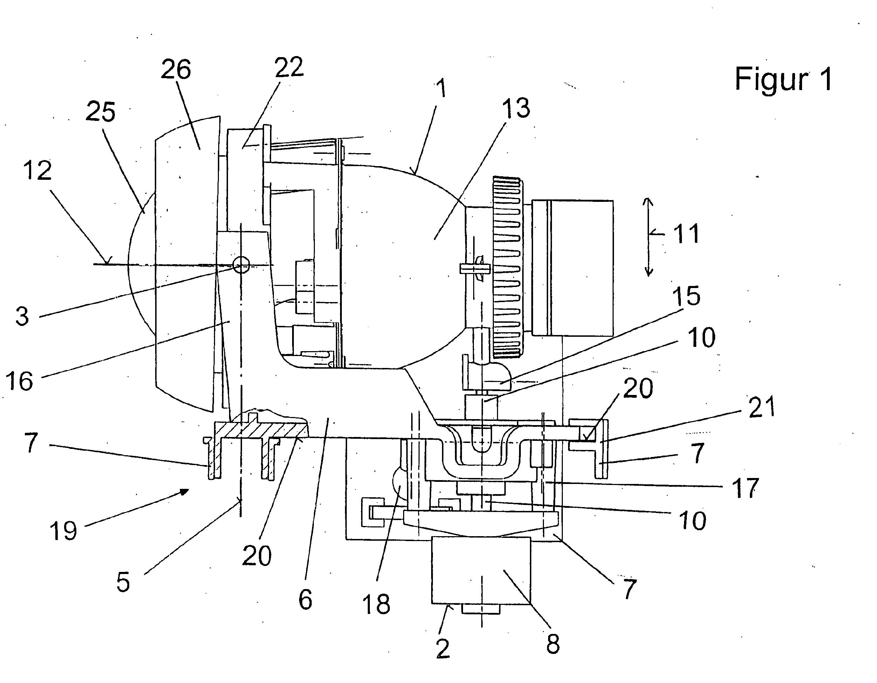

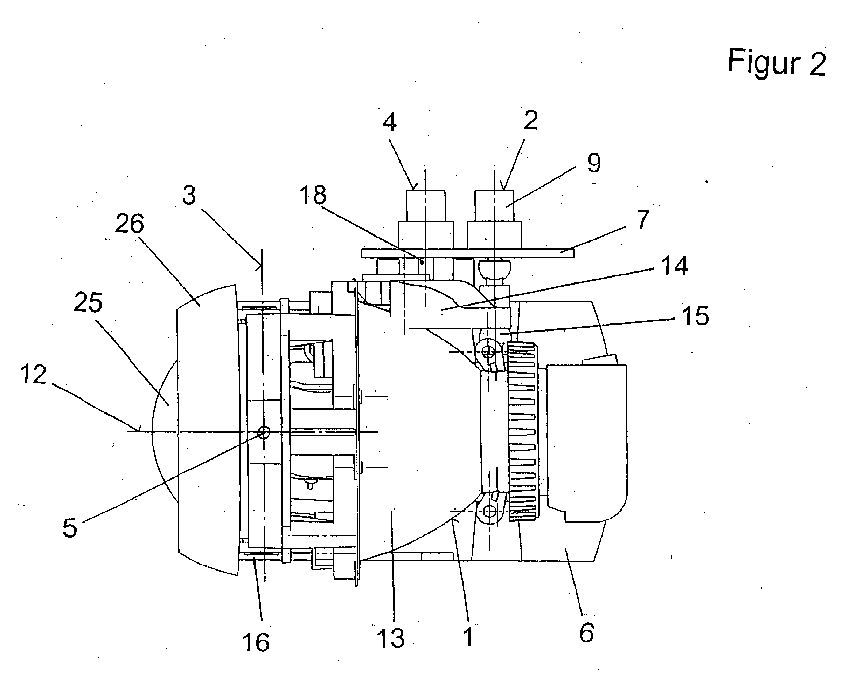

Ein Scheinwerfer für Fahrzeuge weist ein aus Kunststoff bestehendes topfförmiges Gehäuse und eine die vordere Seite des Gehäuses abschließende Lichtscheibe auf (nicht dargestellt). Im von Gehäuse und Lichtscheibe gebildeten Innenraum ist mindestens ein erstes Lichtmodul 1 (siehe Figuren 1 und 2) angeordnet. Als Lichtmodul 1 dient ein Projektionsmodul, das aus einem eilipsoidförmigen Reflektor 13. mindestens einer eine Hell-Dunkelgrenze erzeugenden Blende (nicht dargestellt) und einer in Lichtaustrittsrichtung nach dem Reflektor 13 angeordneten Linse 22 besteht, die über einen Linsenhalter mit dem vorderen Rand des Reflektors 13 verbunden ist. Das Lichtmodul 1 kann für eine oder mehrere einstellbare Lichtfunktionen ausgelegt sein.
Das Lichtmodul 1 ist an ein Trägerelement 7 angebracht, das starr mit dem Gehäuse verbunden ist bzw. von dem Gehäuse selbst gebildet ist. Das Trägerelement 7 ist in Anbaulage des Scheinwerfers in einem unteren Bereich des Innenraums des Scheinwerfers angeordnet. Ein Aufnahmeteil 6 des Lichtmoduls 1, dessen Hauptausdehnungsrichtung horizontal verläuft, liegt auf mehreren Auflageflächen 20 des Trägerelements 7 auf und ist an dem Trägerelement 7 um eine einzige Lagerstelle 19 schwenkbar. Die Lagerstelle 19 ist im vorderen Bereich des Lichtmoduls 1 unterhalb des Lichtmoduls 1 angeordnet. Die Lagerstelle 19 ist von einer an das Trägerelement 7 angeformten Hülse und eine von oben in die Hülse eingesteckten hohlen Lagerzapfen des Aufnahmeteils 6 gebildet. Das Aufnahmeteil 6 liegt im Bereich der Lagerstelle 19 und in einem hinteren Bereich auf einer der Auflageflächen 20 des Trägerelements 7 auf und ist vertikal durch mehrere Halteelemente 21 an dem Trägerelement 7 arretiert. Eines der Halteelemente 21 ist an dem hinteren Bereich des Aufnahmeteils 6 angeordnet ist und von einer seitlich geöffneten Nut des Trägerelements 7 gebildet. Die Nut kann auch in das Aufnahmeteil eingebracht sein. Das Aufnahmeteil 6 des Lichtmoduls 1 ist durch eine zweite Einstellvorrichtung 4 um die vertikale Achse 5 schwenkbar. Die zweite Einstellvorrichtung 4 ist an dem Trägerelement 7 befestigt und weist ein Stellelement 18 auf, das in seiner Längsausdehnung parallel zur horizontalen Achse 3 verläuft und über eine gelenkartige Verbindung mit dem Aufnahmeteil 6 gekoppelt ist. Die zweite Einstellvorrichtung 4 weist eine manuelle zweite Stelleinrichtung (nicht dargestellt) mit einem am Scheinwerfer angeordneten Betätigungselement auf, durch das das Aufnahmeteil 6 um die vertikale Achse 5 justierbar ist. Weiterhin weist die zweite Einstellvorrichtung 4 einen fernbetätigbaren zweiten Steller (nicht dargestellt) auf, der von einem elektrischen Antrieb gebildet ist und durch den das Aufnahmeteil 6 zur Kurvenlichtregelung um die vertikale Achse 5 schwenkbar ist.

Das Lichtmodul 1 ist in seinem vorderen Bereich um die horizontale Achse 3 an dem Aufnahmeteil 6 schwenkbar gelagert. Die horizontale und vertikale Achse 3 bzw. 5 schneiden sich in ein und demselben Punkt auf der optischen Achse 12 des Lichtmoduls 1. Die horizontale Achse 3 ist von zwei Lagerstellen definiert, die zwischen vertikal nach oben gerichteten Haltearmen 16 des Aufnahmeteils 6 und einem das Lichtmodul 1 in seinem vordern Bereich umgebenden Halterahmen 22 bestehen. Der Halterrahmen 22 ist über Tragarme starr mit dem vorderen Rand des Reflektors 13 verbunden. Das Lichtmodul 1 ist durch eine erste Einstellvorrichtung 2 um die horizontale Achse 3 schwenkbar. Die erste Einstellvorrichtung 2 besteht aus einem fernbetätigbaren ersten Steller 8 und einer manuellen ersten Stelleinrichtung 9. Der Steller 8 ist im hinteren Bereich seitlich neben dem Reflektor 13 angeordnet und an einer Haltevorrichtung 17 des Aufnahmeteils 6 angebracht. Der Steller 8 ist von einem elektrischen Antrieb gebildet und weist zusammen mit der ersten Stelleinrichtung 9 ein Stellglied 10 auf. Das Stellglied 10 verläuft vertikal und weist mit seinem freien Ende nach oben. Zwischen diesem freien Ende und einem am vorderen Rand des Reflektors 13 befestigten Gelenkteil 14 besteht eine gelenkartige Verbindung 15, die aus einem Kugelkopf und einer Gelenkschale besteht, in welcher der Kugelkopf parallel zur optischen Achse 12 verschiebbar geführt ist. Die manuelle erste Stelleinrichtung 9 ist über ein Getriebe (nicht dargestellt) mit dem Stellglied 10 verbunden. Durch die erste Stelleinrichtung 9 ist das Lichtmodul 1 um die horizontale Achse 3 justierbar. Der fernbetätigbare erste Steller 8 dient zur Leuchtweiteregelung.

Ein zweites Lichtmodul 1 ist in Figur 2 dargestellt. Das zweite Lichtmodul 1 weist gegenüber dem ersten Lichtmodul 1 im Wesentlichen die nachstehend beschriebenen Unterschiede auf. Der fernbetätigbare erste Steller 8 ist von der manuellen ersten Stelleinrichtung 9 an dem Aufnahmeteil 6 getragen. Der Steller 8 ist in einer nach oben geöffneten Vertiefung des Aufnahmeteils 6 angeordnet und in der Vertiefung durch eine schraubenförmige Halterung, der manuellen ersten Stelleinrichtung 9 in der Senkrechten verstellbar. An dem rückwärtigen Bereich des Trägerelements 7 sind Anschlüsse, für biegsame Wellen angeordnet. Die Anschlüsse sind über ein nicht dargestelltes Getriebe mit einer manuellen zweiten Stelleinrichtung (nicht dargestellt) bzw und mit der manuellen ersten Stelleinrichtung 9 gekoppelt. Das Trägerelement 7 erstreckt sich in seiner Hauptausdehnung horizontal ist lösbar an der Innenseite eines Scheinwerfergehäuses festsetzbar. Bei dem zweiten Lichtmodul 1 weist die zweite Einstelleinrichtung 4 nur die manuelle zweite Stelleinrichtung auf. Das zweite Lichtmodul 1 kann gegen ein Lichtmodul ausgetauscht werden, bei dem die zweite Einstelleinrichtung 4 sowohl eine manuelle zweite Stelleinrichtung als auch einen zur Kurvenlichtregelung dienenden zweiten Steller aufweist.

Die horizontale und vertikale Achse 3 und 5 gehen beide durch das geometrische Zentrum eines konvexen Vorderseitenabschnitts des Lichtmoduls 1, welcher von der Vorderseite eines die Linse 25 umgebenden Abdeckrahmens 26 gebildet ist.

### Bezugszeichenliste:

- 1.: Lichtmodul
- 2.: erste Einstellvorrichtung
- 3.: horizontale Achse
- 4.: zweite Einstellvorrichtung
- 5.: vertikale Achse
- 6.: Aufnahmeteil
- 7.: Trägerelement
- 8.: erster Steller
- 9.: erste Stelleinrichtung
- 10.: Stellglied
- 11.: Verstellrichtung
- 12.: optische Achse
- 13.: Reflektor
- 14.: Gelenkteil
- 15.: gelenkartige Verbindung
- 16.: Haltearm
- 17.: Haltevorrichtung
- 18.: Stellelement
- 19.: Lagerstelle
- 20.: Auflagefläche
- 21.: Halteelement
- 22.: Halterahmen

## Patentansprüche

1. Scheinwerfer für Verwendung in einem Fahrzeug mit einem Lichtmodul (1), welches in eingebauten Zustand durch eine erste Einstellvorrichtung (2) um eine horizontale Achse (3) und durch eine zweite Einstellvorrichtung (4) um eine vertikale Achse (5) schwenkbar ist, wobei das Lichtmodul (1) an einem Aufnahmeteil (6) und das Aufnahmeteil (6) an einem Trägerelement (7) schwenkbar gelagert ist, dass das Lichtmodul (1) und das Aufnahmeteil (6) durch die horizontale Achse (3) und das Aufnahmeteil (6) und das Trägerelement (7) durch die vertikale Achse (5) miteinander verbunden sind, **dadurch gekennzeichnet, dass** die erste Einstellvorrichtung (2) zum einen einen zur Leuchtweiteregelung dienenden fernbetätigbaren ersten Steller (8) und zum anderen eine um die horizontale Achse (3) justierbare manuelle erste Stelleinrichtung (9) umfasst, wobei der erste Steller (8) zusammen mit der ersten Stelleinrichtung (9) ein das Lichtmodul (1) gegenüber dem Aufnahmeteil (6) tragendes Stellglied (10) aufweist, über das sie gemeinsam mit dem Lichtmodul (1) verbunden sind.

2. Scheinwerfer nach Anspruch 1, **dadurch gekennzeichnet, dass** das Stellglied (10) der ersten Einstellvorrichtung (2) in seiner Verstellrichtung (11) quer zur horizontalen Achse (3) und quer zur optischen Achse (12) des Lichtmoduls (1) verläuft, wobei das Stellglied (10) in einem hinteren Bereich des Lichtmoduls (1) angeordnet ist und die horizontale Achse (3), wie an sich bekannt, in einem vorderen Bereich des Lichtmoduls (1) verläuft.

3. Scheinwerfer nach Anspruch 2, **dadurch gekennzeichnet, dass** zwischen dem Stellglied (10) der ersten Einstellvorrichtung (2) und einem an dem äußeren Rand des Reflektors (13) angebrachten Gelenkteil (14) eine gelenkige Verbindung (15) besteht.

4. Scheinwerfer nach Anspruch 3, **dadurch gekennzeichnet, dass** der fernbetätigbare erste Steller (8) von der manuellen ersten Stelleinrichtung (9) an dem Aufnahmeteil (6) getragen ist.

5. Scheinwerfer nach einem der Ansprüche 1 bis 4, **dadurch gekennzeichnet, dass** das Aufnahmeteil (6) in seiner Hauptausdehnungsrichtung horizontal verläuft und im vorderen Bereich des Lichtmoduls (1) zwei Haltearme (16) mit die horizontale Achse (3) definierenden Lagerstellen und im hinteren Bereich eine Haltevorrichtung (17) für die erste Einstellvorrichtung (2) aufweist.

6. Scheinwerfer nach Anspruch 5, **dadurch gekennzeichnet, dass** das Lichtmodul (1) im vorderen Bereich von einem Halterahmen (22) umgeben ist, der an dem vorderen Rand des Reflektors (13) befestigt ist und mit den Lagerstellen der Haltearme (16) des Aufnahmeteils (6) zusammenwirkt.

7. Scheinwerfer nach einem der Ansprüche 1 bis 6, **dadurch gekennzeichnet, dass** die zwischen dem Aufnahmeteil (6) und dem Trägerelement (7) bestehende zweite Einstellvorrichtung (4) einen zur Kurvenlichtregelung dienenden fernbetätigbaren zweiten Steller und eine manuelle zweite Stelleinrichtung mit einem gemeinsamen Stellelement (18) aufweisen.

8. Scheinwerfer nach einem der Ansprüche 1 bis 8, **dadurch gekennzeichnet, dass** die vertikale Achse (5) durch eine einzige Lagerstelle (19) definiert ist, die in Anbaulage des Scheinwerfers unterhalb des Lichtmoduls (1) angeordnet ist, wobei das Trägerelement (7) in einem Abstand zu der Lagerstelle (19) mindestens eine Auflagefläche (20) für das Aufnahmeteil (6) aufweist.

9. Scheinwerfer nach Anspruch 8, **dadurch gekennzeichnet, dass** zumindest eine der Auflageflächen (20) unterhalb des hinteren Bereichs des Lichtmoduls (1) angeordnet ist und die vertikale Achse (5), wie an sich bekannt, durch einen vorderen Bereich des Lichtmoduls (1) hindurch verläuft.

10. Scheinwerfer nach einem der Ansprüche 1 bis 10, **dadurch gekennzeichnet, dass** zwischen dem Aufnahmeteil (6) und dem Trägerelement (7) mindestens ein Halteelement (21) besteht, welches das Aufnahmeteil (6) in Verstellrichtung (11) an dem Trägerelement (7) haltert.

11. Scheinwerfer nach einem der Ansprüche 1 bis 10, **dadurch gekennzeichnet, dass** die vertikale Achse (5) durch den geometrischen Zentrumsbereich eines konvexen Vorderseitenabschnitts des Lichtmoduls (1) hindurchgeht.

12. Scheinwerfer nach Anspruch 11, **dadurch gekennzeichnet, dass** der konvexe Vorderseitenabschnitt des Lichtmoduls die konvexe Vorderseite der Linse (25) ist.

13. Scheinwerfer nach Anspruch 11 oder 12, **dadurch gekennzeichnet, dass** der konvexe Vorderseitenabschnitt des Lichtmoduls die konvexe Vorderseite eines die Linse (25) umgebenden Abdeckrahmens (26) ist.

14. Scheinwerfer nach einem der Ansprüche 1 bis 13, **dadurch gekennzeichnet, dass** der zur Leuchtweiteregelung dienende fernbetätigbare Steller (8) und die justierbare erste Stelleinrichtung (9) von einem einzigen ferbetätigbaren Steller gebildet sind, wobei der einzige Steller zum Justieren des Lichtmoduls (1) in einer Grundeinstellung mit einem einen nicht flüchtigen Speicher umfassenden Steuergerät zur Speicherung eines die Grundeinstellung des Lichtmoduls definierenden Einstellwertes verbunden ist.

## Claims

1. Headlight for use in a motor vehicle comprising a light module (1) which is pivotable about a horizontal axis (3) by a first adjusting device (2) and about a vertical axis (5) by a second adjusting device (4) wherein said light module (1) is pivotably arranged in a receiving means (6) while said receiving means (6) is pivotably arranged on a supporting element (7) and wherein said light module (1) and said receiving means (6) are interconnected through the horizontal axis (3) and said receiving means (6) and said supporting element (7) through the vertical axis (5), **characterized by** the fact that the first adjusting device (2) comprises on the one hand a remote controllable first positioner (8) for headlight levelling and on the other hand a manually operated first setting means (9) which is adjustable about said horizontal axis (3), said first positioner (8) together with said first setting means (9) comprising a setting member (10) which carries the light module (1) opposite said receiving means (6) and which commonly connects said components to the light module (1).

2. Headlight as set forth in Claim 1, **characterized by** the fact that the adjustment direction of the setting member (10) of the first adjusting device (2) is cross to its horizontal axis (3) and cross to the optical axis (12) of the light module (1), said setting member (10) being disposed rearwardly of the light module (1) and that the horizontal axis (3) extends in a forward area of the light module (1) as known per se.

3. Headlight as set forth in Claim 2, **characterized by** the fact that a link joint (15) is provided between the setting member (10) of the first adjusting device (2) and a link portion (14) attached to the outer peripheral area of a reflector (13).

4. Headlight as set forth in Claim3, **characterized by** the fact that the remote controllable first positioner (8) is carried by the first manually operated setting means (9) on said receiving means (6).

5. Headlight as set forth in any of the preceding Claims 1 to 4, **characterized by** the fact that the receiving means (6) extends horizontally in its main direction and comprises two holding arms (16) provided with bearing positions defining said horizontal axis (3) in the forward area of the light module (1) and a holding means (17) for the first adjusting device (2) in the rear area thereof.

6. Headlight as set forth in Claim 5, **characterized by** the fact that the light module (1) is forwardly surrounded by a holding frame (22) which is attached to the frontal peripheral area of the reflector (13) to coact with the bearing positions of the holding arms (16) for the receiving means (6).

7. Headlight as set forth in any of the preceding Claims 1 to 6, **characterized by** the fact that the second adjusting device (4) disposed between the receiving means (6) and the supporting element (7) comprises a remote controllable second positioner (4) for curve light control and a manually operated second setting means with a common setting element (18).

8. Headlight as set forth in any of the preceding Claims 1 to 8, **characterized by** the fact that the vertical axis (5) is defined by one only bearing position (19) disposed beneath the light module (1) when the headlight is in place wherein the supporting element comprises at least one supporting section (20) for the receiving means (6) which is spaced from said bearing position (19).

9. Headlight as set forth in Claim 8, **characterized by** the fact that at least one of the supporting sections (20) is disposed beneath the rearward area of the light module (1) and that the vertical axis extends through a forward area of the light module (1) as known per se.

10. Headlight as set forth in any of the preceding Claims 1 to 10, **characterized by** the fact that at least one holding element (21) is arranged between the receiving means (6) and the supporting element (7) to hold said receiving means (6) on said supporting element (7) in adjusting direction (11).

11. Headlight as set forth in any of the preceding Claims 1 to 10, **characterized by** the fact that the vertical axis (5) extends through the geometrical center area of a convex frontal section of the light module (1).

12. Headlight as set forth in Claim 11, **characterized by** the fact that said convex frontal section of the light module is the convex frontal face of a lens (25).

13. Headlight as set forth in Claim 11, **characterized by** the fact that said convex frontal section of the light module is the convex frontal face of a cover frame (26) that surrounds said lens (25).

14. Headlight as set forth in any of the preceding Claims 1 to 13, **characterized by** the fact that the remote controllable positioner (8) serving for headlight levelling control and the first setting device (9) are formed by one only remote controllable positioner which only one positioner for adjusting the light module (1) in a basic adjustment position is connected to a control unit with nonvolatile memory to store a set value that defines said basic adjustment position of the light module.

## Revendications

1. Projecteur pour l'équipement d'un véhicule automobile, avec un module d'éclairage (1) qui, à l'état monté, peut être pivoté par un premier dispositif de réglage (2) autour d'un axe horizontal (3) et par un deuxième dispositif de réglage (4) autour d'un axe vertical (5), le module d'éclairage (1) étant monté en pivotement sur une pièce de réception (6) et la pièce de réception (6) sur un élément de support (7), le module d'éclairage (1) et la pièce de réception (6) étant reliés ensemble par l'axe horizontal (3) et la pièce de réception (6) et l'élément de support (7) étant reliés ensemble par l'axe vertical (5), **caractérisé en ce que** le premier dispositif de réglage (2) comprend, d'une part, un premier régleur téléactionnable (8), qui sert à corriger l'angle de site, et, d'autre part, un premier dispositif de réglage actionnable manuellement (9), qui peut être ajusté autour de l'axe horizontal (3), le premier régleur (8), en commun avec le premier dispositif de réglage (9), présentant un organe de réglage (10) portant le module d'éclairage (1) par rapport à la pièce de réception (6), par l'intermédiaire duquel ils sont reliés en commun au module éclairage (1).

2. Projecteurs selon la revendication 1, **caractérisé en ce que** l'organe de réglage (10) du premier dispositif de réglage (2) s'étend, dans sa direction de réglage, perpendiculairement à l'axe horizontal (3) et perpendiculairement à l'axe optique (12) du module d'éclairage (1), l'organe de réglage (10) étant agencé dans une zone arrière du module d'éclairage (1) et l'axe horizontal (3) s'étendant, de manière connue, dans une zone avant du module d'éclairage (1).

3. Projecteurs selon la revendication 2, **caractérisé en ce qu'**une liaison articulée (15) existe entre l'organe de réglage 10) du premier dispositif de réglage (2) et une articulation (14) agencée sur le bord extérieur du réflecteur (13).

4. Projecteur sur la revendication 3, **caractérisé en ce que** le premier régleur téléactionnable (8) est porté par le premier dispositif de réglage manuel (9) équipant la pièce de réception (6).

5. Projecteur selon l'une des revendications 1 à 4, **caractérisé en ce que** la pièce de réception (6) s'étend horizontalement dans le sens de sa plus grande dimension et présente, dans la zone avant du module d'éclairage (1), deux bras de maintien (16) avec des points d'appui définissant l'axe horizontal (3), et, dans la zone arrière, un dispositif de maintien (17) pour le premier dispositif de réglage (2).

6. Projecteur selon la revendication 5, **caractérisé en ce que** le module d'éclairage (1) est entouré, dans la zone avant, d'un cadre de maintien (22) qui est fixé au bord inférieur du réflecteur (13) et coopère avec les points d'appui des bras de maintien (16) de la pièce de réception (6).

7. Projecteur selon l'une des revendications 1 à 6, **caractérisé en ce que** le deuxième dispositif de réglage (4), situé entre la pièce de réception (6) et l'élément de support (7), présente un deuxième régleur téléactionnable, qui sert à corriger la lumière de virage, et un deuxième dispositif de réglage actionnable manuellement avec un élément de réglage (18) commun.

8. Projecteur selon l'une des revendications 1 à 8, **caractérisé en ce que** l'axe vertical (5) est défini par un seul point d'appui qui, dans la position de montage du projecteur, est disposé au-dessous du module d'éclairage (1), l'élément de support (7) présentant, à distance du point d'appui, au moins une surface d'appui (20) pour la pièce de réception (6).

9. Projecteur selon la revendication 8, **caractérisé en ce qu'**au moins l'une des surfaces d'appui (20) est agencée au-dessous de la zone arrière du module d'éclairage (1) et que l'axe vertical (5) s'étend à travers une zone avant du module d'éclairage (1).

10. Projecteur selon l'une des revendications 1 à 10, **caractérisé en ce que**, entre la pièce de réception (6) et l'élément de support (7), est agencé au moins un élément de maintien (21) qui maintient la pièce de réception (6) sur l'élément de support (7), dans la direction de réglage (11).

11. Projecteur selon l'une des revendications 1 à 10, **caractérisé en ce que** l'axe vertical (5) passe à travers la zone centrale géométrique d'une zone latérale, antérieure, convexe du module d'éclairage (1).

12. Projecteur selon la revendication 11, **caractérisé en ce que** la zone latérale, antérieure, convexe du module d'éclairage est la face antérieure, convexe de la lentille (25).

13. Projecteur selon revendication 11 ou 12, **caractérisé en ce que** la zone latérale, antérieure, convexe du module d'éclairage est la face antérieure, convexe d'un cadre de recouvrement (26) qui entoure la lentille (25).

14. Projecteur selon l'une des revendications 1 à 13, **caractérisé en ce que** le régleur téléactionnable (8), qui sert à corriger l'angle de site, et le premier dispositif de réglage (9) sont formés par un seul régleur téléactionnable, ledit seul régleur, pour ajuster le module d'éclairage (1) dans une position de base, étant relié à un appareil de commande comprenant une mémoire non volatile pour la mémorisation d'une valeur de réglage qui définit la position de base du module d'éclairage.
